# EUROPÄISCHE PATENTSCHRIFT

(11) **EP 1 535 775 B1**
(45) Veröffentlichungstag und Bekanntmachung des Hinweises auf die Patenterteilung: **21.11.2007**
(21) Anmeldenummer: 04026636.3
(22) Anmeldetag: 10.11.2004
(51) Int. Cl.: B60H 3/06

(54) **Filteranordnung**
Filtration device
Dispositif de filtration

(30) Priorität: 28.11.2003 DE 10356311
(43) Veröffentlichungstag der Anmeldung: 01.06.2005
(73) Patentinhaber: Behr GmbH & Co. KG, 70469 Stuttgart (DE); Carl Freudenberg KG, 69469 Weinheim (DE)
(72) Erfinder: Boschert, Björn, 71254 Ditzingen (DE); Felber, Uwe, Dipl.-Ing., 69518 Absteinach (DE); Heberle, Arthur, Dr.-Ing., 68163 Mannheim (DE); Häfner, Uwe, 69469 Weinheim (DE)
(74) Vertreter: Grauel, Andreas

(56) Entgegenhaltungen:
- EP-A- 0 744 309
- EP-A- 1 254 796
- FR-A- 2 741 568
- FR-A- 2 775 635

## Beschreibung

Die Erfindung betrifft eine Filteranordnung, insbesondere für ein Kraftfahrzeug, gemäß dem Oberbegriff des Anspruchs 1.

Herkömmlicherweise werden in einem Filterdeckel angeordnete Filter durch eine Öffnung im Filtergehäuse in einen hierfür vorgesehenen Schacht eingeschoben. Anschließend wird der Schacht mit einem Filterdeckel verschlossen. Häufig treten aber Bauraumprobleme auf, beispielsweise auf Grund von Verdampferrohren. In diesem Fall kann es erforderlich sein, dass ein Einschieben des in einem Filterdeckel angeordneten Filters, wobei der Filterdeckel in Anlage an einer Einfuhrschräge ist, mit anschließender Schwenkbewegung erforderlich ist. Hierbei treten u.a. auf Grund des Hohlraums zwischen der Einführschräge und dem Filterdeckel Probleme bei der Abdichtung auf, so dass eine derartige Filteranordnung noch Wünsche offen lässt.

EP 1 254 796 A1 zeigt eine Filteranordnung gemäß dem Oberbegriff des Anspruchs 1.

Es ist Aufgabe der Erfindung, eine verbesserte Filteranordnung zur Verfügung zu stellen.

Diese Aufgabe wird gelöst durch eine Filteranordnung mit den Merkmalen des Anspruchs 1. Vorteilhafte Ausgestaltungen sind Gegenstand der Unteransprüche.

Erfindungsgemäß ist eine Filteranordnung, insbesondere für ein Belüftungssystem eines Kraftfahrzeugs, vorgesehen, mit einem Filterdeckel, in dem ein Filter anordenbar ist, und einem Gehäuse mit einer Einführöffnung, in dem der Filterdeckel anordenbar ist, wobei im Gehäuse eine Einführschräge vorgesehen ist, und der Filterdeckel einen Bereich aufweist, dessen Breite größer als die Breite der Einführöffnung des Gehäuses ist, wobei der Bereich auf der Seite der Einführschräge angeordnet ist. Durch das Überstehen des Bereichs über die Einführöffnung ermöglicht sich eine verbesserte Abdichtung auch in Fällen, in denen kein einfaches Einschieben des Filterdeckels samt Filter in das Gehäuse in gerader Richtung möglich ist, da beispielsweise Verdampferrohre im Weg sind.

Zur verbesserten Einführbarkeit und Positionierbarkeit ist das Gehäuse im Bereich der Einführschräge verbreitert ausgebildet, wobei die Verbreiterung erfindungsgemäß durch einen keilförmigen Einführkanal gebildet ist.

Am Bereich des Filterdeckels, der an dem Gehäuse anliegt, oder am entsprechenden Bereich des Gehäuses ist zur Optimierung der Abdichtung bevorzugt mindestens ein Dichtelement vorgesehen.

Der Filterdeckel weist in seinem Bereich bevorzugt beidseitig überstehende Ränder auf, die Teil des Bereichs sind. Diese Ränder können in einer Ebene oder aber in einem Winkel zueinander angeordnet sein. Sind die Ränder blechartig ausgebildet, so kann das Einführen mittels Einschieben und anschließendem Schwenken erfolgen. Ist der Filterdeckel in seinem Bereich keilförmig ausgebildet, so ergibt sich automatisch beim Einschieben eine Verschiebung des Filterdeckels nach oben und das Schwenken entfällt. Diese Art des Einführens hat den Vorteil, dass die Montage in Folge der gleichbleibenden Bewegungsrichtung einfacher ist, während das Einführen mittels einer linearen Bewegung und anschließenden Schwenkens günstiger für die Dichtflächen im Falle des Vorhandenseins von in Hinblick auf eine Scherung empfindlichen Dichtelementen ist.

Im Folgenden wird die Erfindung anhand zweier Ausführungsbeispiele unter Bezugnahme auf die Zeichnung im Einzelnen erläutert. In der Zeichnung zeigen:
- Fig. 1: eine schematische, geschnittene Darstellung einer bekannten Filteranordnung nach erfolgtem Einschieben,
- Fig. 2: eine schematische, geschnittene Darstellung einer erfindungsgemäßen Filteranordnung nach erfolgtem Schwenken,
- Fig. 3: eine geschnittene Detailansicht des ersten Ausführungsbeispiels von Fig. 2, wobei der Schnitt in Blickrichtung von Fig. 2 erfolgt,
- Fig. 4: eine geschnittene Detailansicht einer Abwandlung des ersten Ausführungsbeispiels von Fig. 2, wobei der Schnitt in Blickrichtung von Fig. 2 erfolgt, und
- Fig. 5: eine Seitenansicht eines Filterdeckels gemäß dem zweiten Ausführungsbeispiel.

Eine Filteranordnung 1, wie sie in einem Kraftfahrzeug-Belüftungssystem verwendet wird, weist einen Filterdeckel 2 und einen im Filterdeckel 2 angeordneten Filter 3 auf, die in einem Gehäuse 4 angeordnet sind. Das Gehäuse 4 ist derart ausgebildet, dass es eine Einführhilfe, vorliegend eine Einführschräge 5, für die Filteranordnung 1 aufweist. Durch die Einführschräge 5 lässt sich der Filterdeckel 2 samt Filter 3 einfach in das Gehäuse 4 einführen und hierin mittels Schwenken um die in Einführrichtung vorne liegende Kante 6 positionieren.

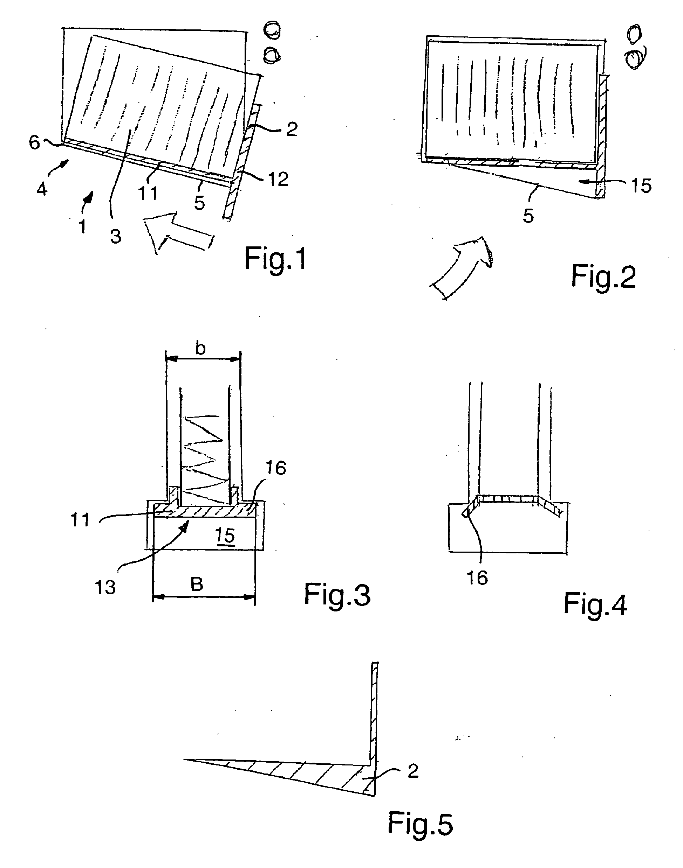

Um den Filterdeckel 2 gegenüber dem Gehäuse 4 abzudichten ist gemäß dem in Fig. 3 dargestellten ersten Ausführungsbeispiel der Filterdeckel 2 derart ausgebildet, dass er in seinem nach dem Einbau innerhalb des Gehäuses 4 liegenden, beim Einschieben an der Einführschräge 5 entlanggleitenden Bereich 11 über die gesamte Länge breiter ausgebildet ist als im übrigen Bereich 12, und insbesondere auch breiter als die Gehäuseöffnung 13, durch die der Filter 3 in das Gehäuse 4 eingeführt wird. Somit ist ein keilförmiger Einführkanal 15 vorgesehen, dessen Breite B über die gesamte Länge größer als die Breite b der Gehäuseöffnung 13 ist.

Gemäß dem ersten Ausführungsbeispiel verläuft die sich beidseitig erstrekkende Verbreiterung des Bereichs 11 in einer Ebene, so dass auf beiden Seiten der Gehäuseöffnung 13 Anlageflächen für überstehenden Ränder 16 des Bereichs 11 des Filterdeckels 2 vorgesehen sind.

Um den Filterdeckel 2 mit dem Filter 3 im Gehäuse 4 zu halten, ist eine mechanische, bevorzugt lösbare Verbindung (nicht dargestellt) vorgesehen. Diese kann beispielsweise durch eine Clips-Verbindung, einen Riegel oder eine Sicherungsschraube gebildet werden.

Bei einer in Fig. 4 dargestellten Abwandlung ist die Ausgestaltung des Gehäuses 4 unverändert, jedoch sind die überstehenden Ränder 16 des Bereichs 11 in einem Winkel zum restlichen, mittleren Teil des Bereichs 11 angeordnet.

Zur besseren Abdichtung können im Anlagebereich am Gehäuse 4 oder dem Bereich 11 des Filterdeckels 2 elastische Dichtelemente vorgesehen sein.

Gemäß einem zweiten Ausführungsbeispiel, wovon der Filterdeckel 2 in Fig. 5 dargestellt ist, ist der Bereich 11 auch keilförmig ausgebildet, so dass beim Einschieben des Filterdeckels mit dem hieran angeordneten Filter auch nach oben bewegt und ohne Schwenken positioniert wird. Auch in diesem Fall ist der Bereich 11 breiter als die Gehäuseöffnung ausgebildet, so dass eine Abdichtung zwischen Gehäuse und Filterdeckel möglich ist.

### Bezugszeichenliste

- 1: Filteranordnung
- 2: Filterdeckel
- 3: Filter
- 4: Gehäuse
- 5: Einführschräge
- 6: Kante
- 11: Bereich
- 12: Bereich
- 13: Gehäuseöffnung
- 15: Einführkanal
- 16: Rand

- B: Breite Einführkanal
- b: Breite Gehäuseöffnung

## Patentansprüche

1. Filteranordnung, insbesondere für ein Belüftungssystem eines Kraftfahrzeugs, mit einem Filterdeckel (2), in dem ein Filter (3) anordenbar ist, und einem Gehäuse (4) mit einer Einführöffnung (13), in dem der Filterdeckel (2) anordenbar ist, wobei im Gehäuse (4) eine Einführschräge (5) vorgesehen ist, die durch einen keilförmigen Einführkanal (15) gebildet ist und der Filterdeckel (2) einen Bereich (11) aufweist, dessen Breite (B) größer als die Breite (b) der Einführöffnung (13) des Gehäuses (4) ist, wobei der Bereich (11) auf der Seite der Einführschräge (5) angeordnet ist **dadurch gekennzeichnet, dass** die Keilspitze des keilförmigen Einführkanals (15) an der in Einführrichtung vorne liegenden Kante (6) des eingebauten Filterdeckels (2) im Gehäuse angeordnet ist.

2. Filteranordnung nach Anspruch 1, **dadurch gekennzeichnet, dass** das Gehäuse (4) im Bereich der Einführschräge (5) verbreitert ausgebildet ist.

3. Filteranordnung nach Anspruch 2, **dadurch gekennzeichnet, dass** die Verbreiterung des Gehäuses (4) durch den keilförmigen Einführkanal (15) gebildet ist.

4. Filteranordnung nach einem der vorhergehenden Ansprüche, **dadurch gekennzeichnet, dass** am Bereich (11) des Filterdeckels (2), der an dem Gehäuse (4) anliegt, oder am entsprechenden Bereich des Gehäuses (4) mindestens ein Dichtelement vorgesehen ist.

5. Filteranordnung nach einem der vorhergehenden Ansprüche, **dadurch gekennzeichnet, dass** der Filterdeckel (2) in seinem Bereich (11) beidseitig überstehende Ränder (16) aufweist, die Teil des Bereichs (11) sind.

6. Filteranordnung nach Anspruch 5, **dadurch gekennzeichnet, dass** die Ränder (16) in einer Ebene angeordnet sind.

7. Filteranordnung nach Anspruch 5, **dadurch gekennzeichnet, dass** die Ränder (16) in einem Winkel zueinander angeordnet sind, wobei sie mit ihren Enden vom Filter (3) nach außen abstehen.

8. Filteranordnung nach einem der vorhergehenden Ansprüche, **dadurch gekennzeichnet, dass** der Filterdeckel (2) in seinem Bereich (11) keilförmig ausgebildet ist.

## Claims

1. A filtration device, in particular for a ventilation system in a motor vehicle, having a filter cover (2) in which it is possible to position a filter (3), and a housing (4) with an introduction opening (13) in which it is possible to position the filter cover (2), there being provided in the housing (4) an introduction incline (5) which takes the form of a wedge-shaped introduction channel (15), and the filter cover (2) having an area (11) the width (B) of which is greater than the width (b) of the introduction opening (13) in the housing (4), said area (11) being positioned at the side of the introduction incline (5),
**characterised in that**
the point of the wedge-shaped introduction channel (15) is positioned in the housing at the front edge (6) of the mounted filter cover (2) when viewed in the direction of introduction.

2. A filtration device in accordance with claim 1,
**characterised in that**
the housing (4) is designed such that it widens out in the area of the introduction incline (5).

3. A filtration device in accordance with claim 2,
**characterised in that**
the wedge-shaped introduction channel (15) represents the widened section of the housing (4).

4. A filtration device in accordance with one of the preceding claims,
**characterised in that**
at least one sealing element is provided in the area (11) of the filter cover (2) adjacent to the housing (4) or in the corresponding area of the housing (4).

5. A filtration device in accordance with one of the preceding claims,
**characterised in that**
the area (11) of the filter cover (2) has edges (16) which project on both sides and which form part of area (11).

6. A filtration device in accordance with claim 5,
**characterised in that**
the edges (16) are positioned in one plane.

7. A filtration device in accordance with claim 5,
**characterised in that**
the edges (16) are positioned at an angle to one another, their ends projecting outwards from the filter (3).

8. A filtration device in accordance with one of the preceding claims,
**characterised in that**
the area (11) of the filter cover (2) is wedge-shaped.

## Revendications

1. Dispositif de filtration, en particulier pour un système de ventilation d'un véhicule automobile, comprenant un couvercle de filtre (2), dans lequel un filtre (3) peut être disposé, et un boîtier (4) avec une ouverture d'introduction (13), dans lequel le couvercle de filtre (2) peut être disposé, un chanfrein d'introduction (5) étant prévu dans le boîtier (4), lequel chanfrein est formé par un conduit d'introduction (15) en forme de clavette et lequel couvercle de filtre (2) présente une zone (11), dont la largeur (B) est supérieure à la largeur (b) de l'ouverture d'introduction (13) du boîtier (4), la zone (11) étant disposée sur le côté du chanfrein d'introduction (5), **caractérisé en ce que** la pointe de clavette du conduit d'introduction (15) en forme de clavette est disposée sur l'arête (6), située en avant dans le sens d'introduction, du couvercle de filtre (2) intégré dans le boîtier.

2. Dispositif de filtration selon la revendication 1, **caractérisé en ce que** le boîtier (4) est réalisé de façon élargie dans la zone du chanfrein d'introduction (5).

3. Dispositif de filtration selon la revendication 2, **caractérisé en ce que** l'élargissement du boîtier (4) est formé par le conduit d'introduction (15) en forme de clavette.

4. Dispositif de filtration selon l'une quelconque des revendications précédentes, **caractérisé en ce que** au moins un élément d'étanchéité est prévu sur la zone (11) du couvercle de filtre (2), qui s'applique sur le boîtier (4) ou sur la zone correspondante du boîtier (4).

5. Dispositif de filtration selon l'une quelconque des revendications précédentes, **caractérisé en ce que** le couvercle de filtre (2) présente dans sa zone (11) des bords (16) débordant des deux côtés, qui font partie de la zone (11).

6. Dispositif de filtration selon la revendication 5, **caractérisé en ce que** les bords (16) sont disposés dans un plan.

7. Dispositif de filtration selon la revendication 5, **caractérisé en ce que** les bords (16) sont disposés dans un angle les uns par rapport aux autres, sachant qu'ils débordent par leurs extrémités du filtre (3) vers l'extérieur.

8. Dispositif de filtration selon l'une quelconque des revendications précédentes, **caractérisé en ce que** le couvercle de filtre (2) est réalisé en forme de clavette dans sa zone (11).
